Europäisches Patentamt

European Patent Office

Office européen des brevets

(19)

(11) EP 0 677 739 B1

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int Cl.6: **G01N 21/86**

(21) Anmeldenummer: **94105756.4**

(22) Anmeldetag: **14.04.1994**

(54) **Vorrichtung zur Messwerterfassung**

Data acquisition device

Dispositif de saisie de données mesurées

(84) Benannte Vertragsstaaten:
**AT BE CH DE DK ES FR GB GR IE IT LI LU MC NL PT SE**

(43) Veröffentlichungstag der Anmeldung:
**18.10.1995 Patentblatt 1995/42**

(73) Patentinhaber: **HONEYWELL AG**
**63067 Offenbach (DE)**

(72) Erfinder:
• **Mühlenbein, Rudolf, Dipl.-Ing.**
**D-53501 Grafschaft (DE)**

• **Schaust, Karlheinz, Dipl.-Phys.**
**D-56133 Fachbach (DE)**
• **Tuitje, Holger, Dipl.-Ing.**
**D-56564 Neuwied (DE)**

(74) Vertreter: **Herzbach, Dieter, Dipl.-Ing. et al**
**Honeywell Holding AG**
**Patent- und Lizenzabteilung**
**Postfach 10 08 65**
**63008 Offenbach (DE)**

(56) Entgegenhaltungen:
**GB-A- 2 066 452          US-A- 4 300 049**

**Beschreibung**

Die vorliegende Erfindung bezieht sich auf eine Vorrichtung zur Meßwerterfassung nach dem Gattungsbegriff des Patentanspruches 1.

Für die Qualitätskontrolle und die On-line-Fertigungssteuerung von flächenhaften Meßgütern, wie z.B. Papier, Kunststoffolie, Textilbändern oder Blechbahnen werden bestimmte Eigenschaften dieser Meßgüter erfaßt, wobei es hierbei bekannt ist, das Meßgut in einer traversierenden Meßeinrichtung zu vermessen. So kann beispielsweise zur Erfassung von Papierbahnen das Meßgut mit IR-Strahlung unterschiedlicher Wellenlängen bestrahlt oder durchstrahlt werden, wobei durch Messung der reflektierten oder der hindurchgelassenen Strahlungsintensitäten und entsprechende Verrechnung die gesuchten Meßwerte gewonnen werden können. Die verschiedenen IR-Strahlen unterschiedlicher Wellenlänge können aus einer Strahlungsquelle mittels eines Filterrades erzeugt und durch einen Detektor erfaßt werden. Die Strahlen einer Strahlungsquelle könnten jedoch auch über eine Zerhackereinrichtung sowie eine Strahlteiler- und Filtereinrichtung über verschiedene Kanäle verschiedenen Detektoren zugeführt werden. Beispiele für diesen Stand der Technik können der US-A-4 300 049 und der US-A 3 405 268 entnommen werden.

Bei einer das Meßgut traversierenden Meßvorrichtung und einem beweglichen Meßgut ergibt sich der Umstand, daß die Strahlen unterschiedlicher Wellenlängen das Meßgut an verschiedenen Stellen durchsetzen bzw. auf dieses auftreffen, wobei es auf der Hand liegt, daß hierdurch verursachte systematische Fehler dieses bekannten Meßverfahrens keine optimale Prozeßkontrolle erlauben. Im Hinblick auf eine schnelle Meßdatenerfassung für eine schnelle Regelung der Qualitätsmerkmale des Meßgutes wird die Traversiergeschwindigkeit des Meßwagens zunehmend gesteigert, so daß die Abstände zwischen den einzelnen Meßpunkten der Sensoren immer größer werden und damit ebenfalls der Meßfehler immer größer wird.

Es ist daher die Aufgabe der vorliegenden Erfindung, eine Vorrichtung zur Meßwerterfassung anzugeben, bei der die Meßgrößen aus dem gleichen Meßfleck des Meßgutes gewonnen werden können.

Die Lösung dieser Aufgabe gelingt gemäß den kennzeichnenden Merkmalen des Patentanspruches 1. Weitere vorteilhafte Ausgestaltungen der erfindungsgemäßen Vorrichtung sind den abhängigen Ansprüchen entnehmbar.

Anhand der Figuren der beiliegenden Zeichnung sei im folgenden ein Ausführungsbeispiel der erfindungsgemäßen Vorrichtung näher beschrieben. Es zeigen:

Fig. 1 die prinzipielle Meßanordnung gemäß dem Stand der Technik mit einem Meßwagen an einem Querträger über dem Meßgut;

Fig. 2 eine weitere Meßanordnung gemäß dem Stand der Technik mit einem zweiteiligen Meßwagen an einem O-förmigen Träger über dem Meßgut;

Fig. 3 die durch die Meßanordnung gemäß dem Stand der Technik bewirkte Meßgutabtastung;

Fig. 4a die durch die erfindungsgemäße Meßvorrichtung bewirkte Meßgutabtastung in einer ersten Traversierrichtung;

Fig. 4b die durch die erfindungsgemäße Meßvorrichtung bewirkte Meßgutabtastung in einer zweiten Traversierrichtung; und

Fig. 5 eine Darstellung mit dem Meßwagen in zwei unterschiedlichen Positionen zur Erläuterung der Erfindung.

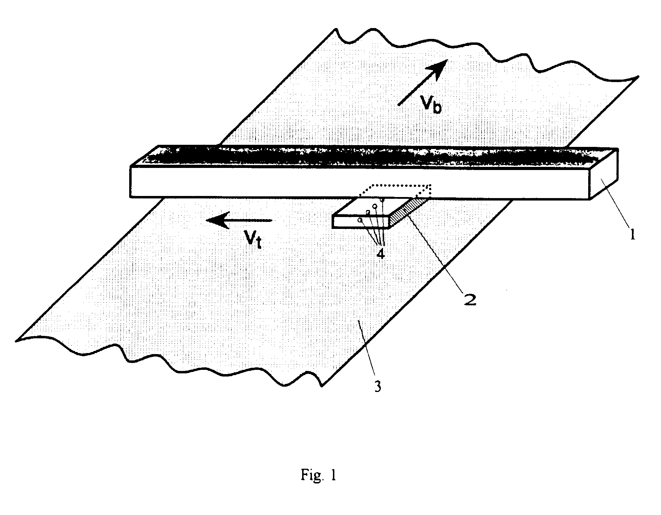

Gemäß Fig. 1 ist ein Meßwagen 2 an einem Querträger 1 über ein sich mit der Gesschwindigkeit $v_b$ bewegendes Meßgut 3 geführt. Der Meßwagen 2 trägt mehrere in gleichen Abständen angeordnete Sensoren bzw. Detektoren 4.

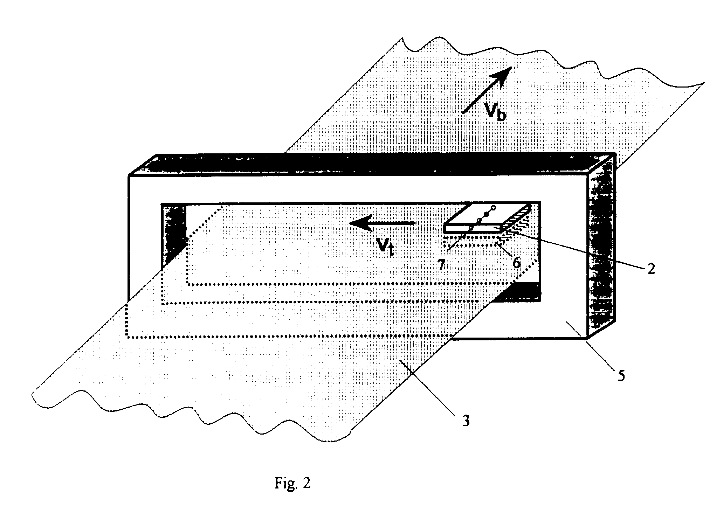

Gemäß Fig. 2 umfaßt der Meßwagen zusätzlich einen unteren Teil 6, wobei der obere Teil 2 und der untere Teil 6 zwischen sich das Meßgut aufweisen. Die Sensoren 4 sind auf einer geraden Meßlinie 7 angeordnet. Die beiden Teile 2, 6 des Meßwagens werden an einem O-förmigen Querträger 5 geführt.

Wie dem Fachmann auf der Hand liegt, können derartige Messungen sowohl als Reflexions- als auch als Transmissionsmessungen durchgeführt werden. Im ersten Fall würde z.B. eine Strahlungsquelle in dem Meßwagen 2 das Meßgut 3 bestrahlen und die Sensoren bzw. Detektoren 4 (Strahlungsempfänger) würden mit entsprechend vorgeschalteten Filtern die reflektierte Strahlung empfangen. Im zweiten Fall befindet sich z. B. die Strahlungsquelle in der unteren Hälfte 6 des Meßwagens und die Strahlung wird im Durchlicht durch die auf der Meßlinie 7 angeordneten Sensoren 4 empfangen. Selbstverständlich können statt einer Strahlungsquelle auch mehrere Strahlungsquellen unterschiedlicher Wellenlänge angeordnet sein.

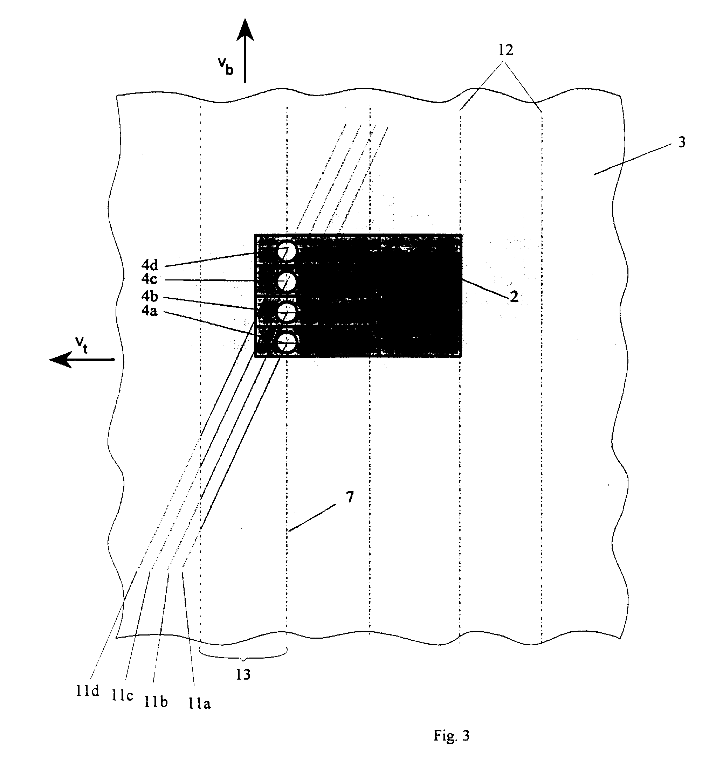

Bei einer solchen bekannten Vorrichtung zur Meßwerterfassung ist es nicht möglich, die einzelnen Meßgrößen aus dem gleichen Meßfleck des Meßgutes zu gewinnen, d.h. eine sogenannte "Same-Spot"-Messung durchzuführen, wie dies aus Fig. 3 hervorgeht, bei der der Sensor 4a die Meßspur 11a, der Sensor 4b die Meßspur 11b usw., jeweils im Querprofilelement 13 vermißt.

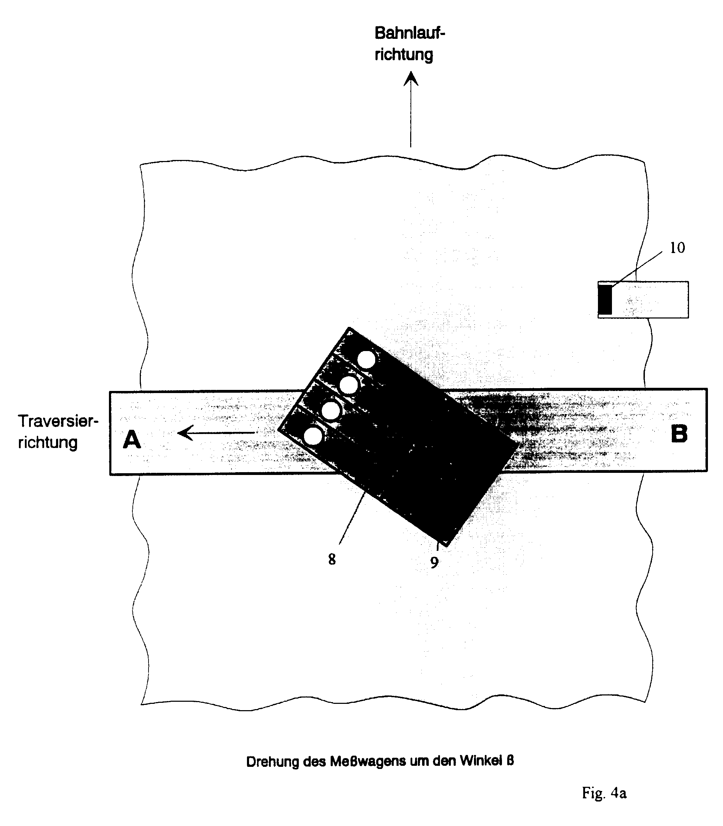

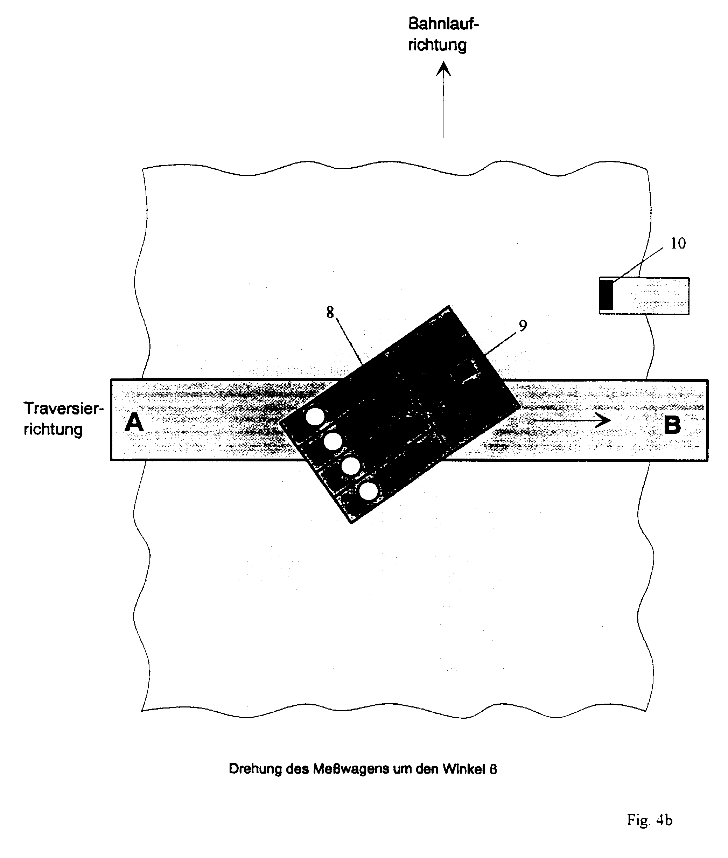

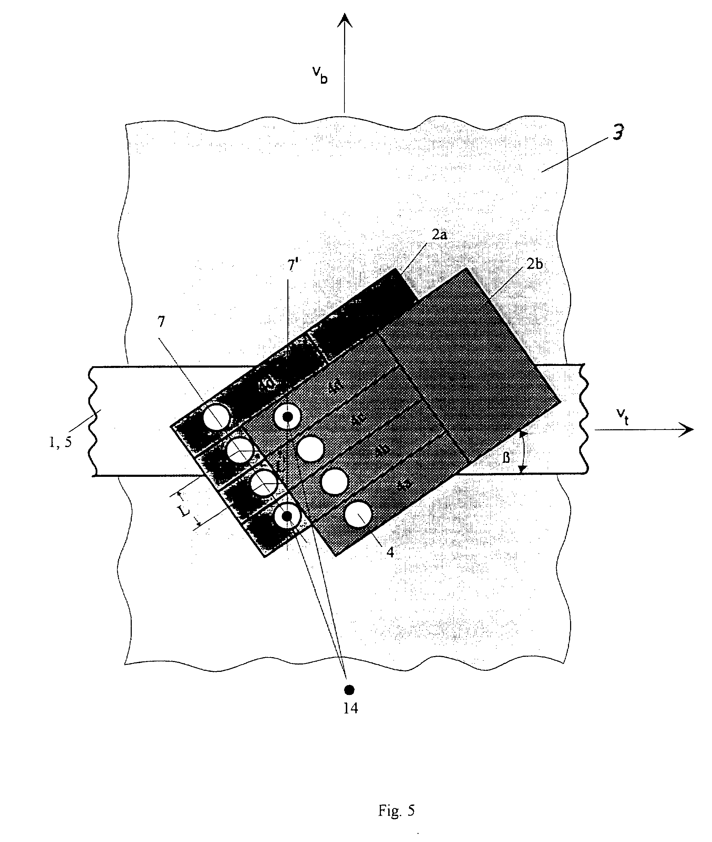

Durch die vorliegende Erfindung wird diesbezüglich Abhilfe geschaffen, wie dies nunmehr anhand der Figuren 4a, 4b und 5 erläutert wird. Zur einfachen Erläuterung sei angenommen, daß z.B. 4 in gleichmäßigen Abständen L angeordnete Sensoren 4a bis 4d auf einer Meßlinie 7 angeordnet sind, z.B. besteht jeder Sensor aus einem Infrarotstrahlungsdetektor, dem beispielsweise ein Interferenzfilter vorgeschaltet ist und der im Auflicht oder Durchlicht durch eine Infrarot-Strahlungsquelle beleuchtet wird.

Gemäß der Erfindung wird bei der Messung der Meßwagen 2 und 6 um eine senkrecht Zu dem Träger 1 bzw. 5 und zu dem Meßgut 3 stehende Achse 8 um einen Winkel β gedreht. Der Winkel β wird wie folgt ermittelt:

$$\tan(\beta) = v_t/v_b$$

wobei $v_t$ die Traversiergeschwindigkeit des Meßwagens und $v_b$ die Bahngeschwindigkeit ist. Beide Größen $v_t$ und $v_b$ werden durch entsprechende Meßeinrichtungen 9 und 10 ermittelt.

Bei einer Umkehr der Traversierrichtung des Meßwagens ändert sich jeweils das Vorzeichen für den Winkel β. Entsprechende nicht dargestellte Antriebsvorrichtungen bewirken jeweils die Winkeleinstellung des Meßwagens im Umkehrpunkt entsprechend der aktuellen Bahn- und Traversiergeschwindigkeit.

In der Fig. 5 ist der um den Winkel β verschwenkte Meßwagen in zwei verschiedenen Zeitpunkten dargestellt. In der Position 2a vermißt der Sensor 4a den Meßfleck 14. In der Position 2b vermißt der Sensor 4d den Meßfleck 14.

Die Abtastung zwischen zwei benachbarten Sensoren erfolgt verzögert um die Zeit

$$\Delta t = L'/V_b$$

wobei L' dem Abstand der Sensoren in Bewegungsrichtung des Meßgutes auf der Meßlinie 7' entspricht. Der Abstand L' errechnet sich aus dem Abstand L der einzelnen benachbarten Sensoren in Richtung der Meßlinie 7 gemäß der Beziehung

$$L' = L \cdot \cos \beta.$$

Damit vermißt der Sensor 4d zum Zeitpunkt $t_2 = 4 \cdot \Delta t$ in der Meßwagenposition 2b den gleichen Meßfleck 14 wie der Sensor 4a in der Meßwagenposition 2a, was einer "Same-Spot"- Messung entspricht.

So kann beispielsweise das Atroflächengewicht nur durch die Verrechnung des feuchtebehafteten Lutroflächengewichtes mit dem bekannten Feuchtegehalt berechnet werden. Die Messung des Flächengewichtes erfolgt meist mit einem radiometrischen Sensor, die Messung der Feuchte dagegen mit einem Infrarotstrahlungssensor. Das Atroflächengewicht des Meßgutes kann nur durch eine mathematische Berechnung in einem Meßmodell erfolgen, demzufolge kann das wahre Atroflächengewicht nur durch eine "Same-Spot"-Messung gewonnen werden.

**Patentansprüche**

1. Vorrichtung zur Meßwerterfassung bei bewegten flächenhaften Meßgütern mittels eines quer zu dem Meßgut bewegten Meßwagens, der mehrere beabstandete Sensoren und/oder Strahlungsemitter trägt, **dadurch gekennzeichnet,** daß der die Sensoren (4) bzw. Strahlungsemitter tragende Meßwagen (2,6) um eine Achse (8) senkrecht zur Meßgutebene schwenkbar ist, wobei der Schwenkwinkel (β) durch die Traversiergeschwindigkeit ($v_t$) des Meßwagens und die Bahngeschwindigkeit ($v_b$) des Meßgutes (3) vorgegeben ist.

2. Vorrichtung nach Anspruch 1, **dadurch gekennzeichnet,** daß der Schwenkwinkel (β) je nach Richtung der Traversierung unterschiedliches Vorzeichen aufweist.

3. Vorrichtung nach Anspruch 1, **dadurch gekennzeichnet,** daß die Sensoren (4) und/oder Strahlungsemitter auf einer Meßlinie (7) in gleichem Abstand (L) angeordnet sind.

4. Vorrichtung nach Anspruch 3, **dadurch gekennzeichnet,** daß die Meßdatenaufnahme der Sensoren (4) und/oder die Anregung der Strahlungsemitter zeitverzögert erfolgt, wobei die Verzögerungszeit Δt zwischen der Abtastung zweier benachbarter Sensoren bzw. zwischen der Anregung zweier benachbarter Strahlungsemitter durch folgende Beziehung

$$\Delta t = L'/V_b$$

vorgegeben ist und wobei L' gemäß folgender Beziehung

$$L' = L \cdot \cos \beta$$

ermittelt wird.

5. Vorrichtung nach Anspruch 4, **dadurch gekennzeichnet**, daß der Schwenkwinkel (β) gemäß folgender Beziehung ermittelt wird

$$\tan \beta = v_t/v_b.$$

6. Vorrichtung nach Anspruch 5, **gekennzeichnet durch** Sensoren (9,10) zur Erfassung der Geschwindigkeit ($v_t$) des Meßwagens (2,6) und der Geschwindigkeit ($v_b$) des Meßgutes (3).

## Claims

1. Device for evaluating measuring values from moving laminar materials under test by means of a measuring platform moved transverse to the moving material under test with said platform bearing a plurality of separated sensors and/or radiation emitters, respectively **characterized in that** the moving platform (2, 6) bearing the sensors (4) or radiation emitters. respectively, is tiltable about an axis (8) which is normal to the plane of the material under test, whereat the tilting angle ($\beta$) is determined by the traversing velocity ($v_t$) of the moving platform and the velocity ($v_b$) of the material under test (3).

2. Device according to claim 1, **characterized in that** the tilting angle ($\beta$) has a different sign as a function of the traversing direction.

3. Device according to claim 1, **characterized in that** the sensors (4) and/or radiation emitters, respectively, are equally spaced with a distance (L) on a measuring line (7).

4. Device according to claim 3, **characterized in that** the acquisition of the measuring data by the sensors (4) and/or the excitation of the radiation emitters is done with time delay, whereat the delay time $\Delta t$ between scanning of two adjacent sensors or between the excitation of two adjacent radiation emitters is provided by the following relationship:

$$\Delta t = L'/v_b$$

and whereat L' is evaluated according to the following relationship:

$$L' = L \cdot \cos\beta.$$

5. Device according to claim 4, **characterized in that** the tilting angle ($\beta$) is evaluated according to the following relationship:

$$\tan \beta = v_t/v_b.$$

6. Device according to claim 5, **characterized by** sensors (9, 10) for evaluating the velocity ($v_t$) of the measuring platform (2, 6) and of the velocity ($v_b$) of the material under test (3).

## Revendications

1. Dispositif pour la saisie de valeurs mesurées dans le cas de matières à mesurer du type surfaces et déplacées au moyen d'un chariot de mesure déplacé transversalement à la matière à mesurer, qui porte plusieurs capteurs et/ou émetteurs de rayonnement espacés, caractérisé en ce que le chariot de mesure (2, 6) portant les capteurs (4) et/ou les émetteurs de rayonnement peut pivoter autour d'un axe (8) perpendiculairement au plan de la matière à mesurer, l'angle de pivotement ($\beta$) étant prédéfini par la vitesse de traversée ($v_t$) du chariot de mesure et la vitesse de trajectoire ($v_b$) de la matière à mesurer.

2. Dispositif selon la revendication 1, caractérisé en ce que l'angle de pivotement ($\beta$) présente différents signes en fonction de la direction de la traversée.

3. Dispositif selon la revendication 1, caractérisé en ce que les capteurs (4) et/ou émetteurs de rayonnement sont disposés sur une ligne de mesure (7) à égale distance (L).

4. Dispositif selon la revendication 3, caractérisé en ce que l'enregistrement des données de mesure des capteurs (4) et/ou l'excitation des émetteurs de rayonnement s'effectue(nt) avec une temporisation, le temps de retard $\Delta t$ entre le balayage de deux capteurs voisins ou entre l'excitation de deux émetteurs de rayonnement voisins étant prédéfini par la relation suivante

$$\Delta t = L'/v_b$$

et L' étant calculé selon la relation suivante

$$L' = L \overset{.}{\cdot} \cos \beta.$$

5. Dispositif selon la revendication 4, caractérisé en ce que l'angle de pivotement ($\beta$) est calculé selon la relation suivante

$$\tan \beta = v_t/v_b.$$

6. Dispositif selon la revendication 5, caractérisé par des capteurs (9, 10) pour la saisie de la vitesse ($v_t$) du chariot de mesure (2, 6) et de la vitesse ($v_b$) de la matière à mesurer (3).

Fig. 1

Fig. 2

Fig. 3

Bahnlaufrichtung

10

Traversierrichtung

A

B

8          9

Drehung des Meßwagens um den Winkel ß

Fig. 4a

Bahnlaufrichtung

Traversierrichtung

A

B

8

9

10

Drehung des Meßwagens um den Winkel ß

Fig. 4b

Fig. 5